# EUROPEAN PATENT SPECIFICATION

(11) **EP 0 230 315 B1**
(45) Date of publication and mention of the grant of the patent: **21.04.1993**
(21) Application number: 87100805.8
(22) Date of filing: 21.01.1987
(51) Int. Cl.: G01L 1/00, G01L 1/04, G01L 1/02, G01L 1/20, G01G 5/06

(54) **Flat-spread force measuring device**
Flache Kraftmessvorrichtung
Dispositif aplati de mesure de force

(30) Priority: 24.01.1986 DE 3602073; 13.02.1986 DE 3604420
(43) Date of publication of application: 29.07.1987
(73) Proprietor: Pfister GmbH, 86165 Augsburg (DE)
(72) Inventor: Häfner, Hans W., D-8890 Aichach (DE)
(74) Representative: Kahler, Kurt, Dipl.-Ing.

(56) References cited:
- DE-A- 3 212 099
- DE-A- 3 344 901
- DE-B- 2 528 242
- US-A- 3 410 135
- US-A- 4 036 317

## Description

### Technical Field:

The present invention relates to a flat-spread force measuring device and in particular to those devices and apparatuses adapted for weighing loads placed on such device or apparatus.

### Background Art:

The DE-A- 1,932,899 discloses a force measuring device comprising two flat elastic members and material of high electric resistance which is arranged in form of lines or areas between the elastic members. The material is subjected to mechanical strain only in normal direction to the layer and changes its resistance dependent on the mechanical strain. With the known force measuring device force introduction is difficult. Furthermore, the manufacture is complex and the measurement accuracy insufficient for many applications. Also, the known device is not adapted for measuring very high forces.

The DE-A- 3,011,266 discloses a pressure measuring device for arealike pressure distributions. The device comprises a mat of elastic material changing its electrical conductivity dependent on pressure exertion. On each main surface a pattern of electrodes is provided the two patterns crossing each other the points of crossing defining a measuring point; at each measuring point a metal plate is secured to the mat the size of the metal plate corresponding to the overlying areas of the electrodes. The known device is not adapted for very large loads and the accuracy is low. There is little resistance against wear.

In the EP-A2-0 145 001 a force measuring cell is disclosed which, in principle, comprises two spaced parallel plates the space being filled with elastomeric material having a pressure sensor embedded therein with another embodiment one of the plates is provided with a peripheral rim extending upwardly and the upper plate may be inserted into the rim such that a narrow annular gap is formed between the outer peripheral surface of the rim which gap is essentially filled with elastomeric material.

Furthermore, this publication discloses a flat-spread force measuring device comprising two spaced parallel plates, the space being filled with bubble-free elastomeric material strongly adhering to surfaces in contact therewith and having embedded therein a plurality of pressure sensors in spaced relationship and commonly connected to a measuring device for determining the load of a truck or the like.

### Disclosure of the Invention:

It is the object of the present invention to provide a flat-spread force measuring device having a simple design, being insensitive against lateral force components whilst exactly measuring vertical force components, even for loads acting nonuniformly onto the device.

It is a further object of the present invention to provide an improved method for manufacturing flat-spread force measuring devices.

The force measuring devices according to the invention comprises the features of claims 1, 4 and 7, respectively. The methods according to the invention comprises the steps of claims 12 and 13, respectively.

Improvements of the force measuring devices of the invention and the methods of the invention are characterized in the dependent claims.

### Brief Description of the Drawings:

- Fig. 1: is a schematic illustration of a known flat-spread force measuring device;
- Fig. 2: is a cross-sectional side view of a second practical flat-spread force measuring device;
- Figs. 3 to 5:: show cross-sectional side views of three further embodiments of flat-spread force measuring devices according to the invention, using a "polymeric concrete" as a basic material for the housing;
- Figs. 6 to 8: show further embodiments of flat-spread force measuring apparatuses of the invention having a defined force introduction from the bottom side of the devices; and
- Figs. 9 to 12: show views of a further embodiment of a flat-spread force measuring apparatus of a wedge-type design.

### Detailled Description of the Embodiments:

As disclosed in the two above mentioned publications the elastomeric material preferably strongly adheres to the surfaces in contact therewith. Any suitable type of pressure transducer may be used,as a piezoelectric or piezoresistive pressure transducer. An example is the absolute pressure sensor KPY 14 manufactured by Siemens AG, Munich (FRG). Also, various elastomeric materials may be used as mentioned in the two above mentioned publications. Exemplary silicone, rubber, RTV-ME 625 of Wacker-Chemie AG, Munich (FRG) may be used.

It should be noted that a high uniformity and incompressibility of the elastomeric material is achieved by removing air or gas bubbles from the material before or during hardening thereof either in vacuum or during a centrifugal moulding process by means of an apparatus (WO-A1-86-3584 published 19,6,86, filing date 10.12.85).

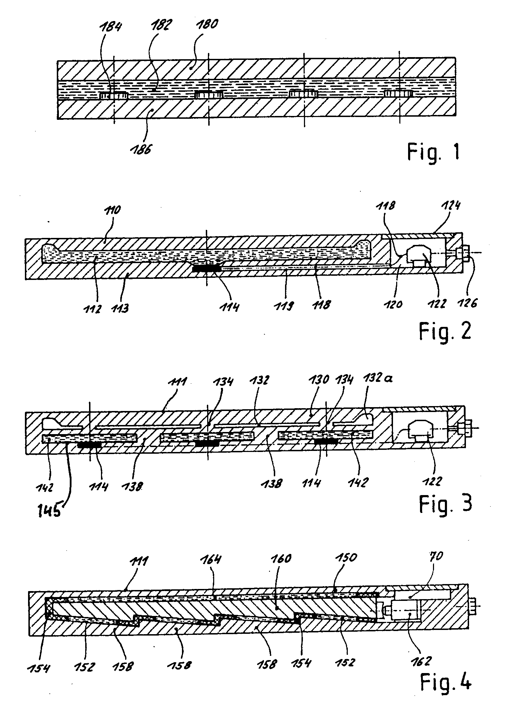

Fig. 2 shows the principal design of a flat-spread force measuring device. Between a base plate 186 and a load introduction plate 180 a layer of elastomeric material 182 is provided which is in contact with a plurality of pressure sensors 184 uniformly distributed over the area of the device which may be rectangular or circular, as examples; it is of importance for the force measuring device according to the invention that the elastomeric material is essentially bubble-free such that any force exerted onto plate 180 is completely transmitted to pressure sensors 184. Furthermore, it is essential that the elastic material strongly adheres to the metal surfaces of plates 180 and 186. This prevents any remarkable squeezing-out of the material upon load application. With a very rigid and stiff load introduction plate 180 even a load which is non-uniformly distributed over the plate 180 will be measured by the device with a high accuracy by combining the force components measured by the various pressure sensors 184 in an evaluation device (not shown).

Fig. 2 shows a flat-spread force measuring apparatus according to a practical embodiment. The apparatus comprises a housing 110 having integrated the force receiving member and the base member. Though the housing could be made of steel with the embodiment the housing 110 is made of a so-called "polymeric concrete", which is mixture of sand, quartz and a polymeric material which will be described in detail hereinafter.

The housing 110 has an essentially plane top surface for placing a subject onto it which is to be weighed. The housing 110 is extremely flat having an overall height in the range of a few centimeters only. Within the housing 110 there is a cavity 115 extending below the top surface of the housing with the exception of a peripheral side wall connecting the top part of the housing with a base part 113. The cavity 115 has a top surface and a bottom surface essentially parallel to each other and to the top surface 111. Whilst the housing may have any suitable form as a rectangular or a square-like form, with the embodiment a circular form is used. It should be noted that the cavity 115 is provided with a peripheral groove 117 at its top surface in order to give a certain resiliency to the top part of the housing.

The cavity 115 is completely filled with elastomeric material 112 which exemplary may be a silicon rubber.

Preferably at a central location within the housing 110 the bottom surface of the cavity 115 is provided with an opening at which a pressure sensor 114 is arranged; connection wire 118 pass through a duct 119 extending from the pressure sensor 114 out of the housing 110 to an electrical device 122 for evaluating the electrical signals supplied from the pressure sensor 114. The electrical device 122 is located in a compartment 120 laterally attached to the housing and closed at the top side by a cover 124 which may be transparent permitting sight to an illuminated indicator provided by the electrical device 122. Through a connector 126 an electrical signal may be transferred to an external evaluation means (not shown).

In operation, a load is placed on the top surface 111 of the housing 110 the force applied thereto being completely transmitted through the elastomeric material 112 to the pressure sensor 114 generating electrical signals representing the load for evaluation and/or indication by the electrical device 122.

It should be noted, that the compartment 120 may be unitary to the housing 110. Also, the electrical device 122 may be moulded together with the moulding of the housing. Also, the connector 126 may be integrated into the wall of the housing during moulding.

The force measuring apparatus according to Fig. 2 will have a reasonable accuracy when a load is placed relatively symmetrical onto the top surface 111 of the housing 110. Thus, such an apparatus may be used as a bath room scales or a grocery scales.

Fig. 3 shows a first embodiment of a flat-spread force measuring apparatus having improved accuracy even for loads asymmetrically placed on the top surface 111 of a housing 130. For this purpose, within the unitary housing 130 several pressure sensors 114 are arranged in spaced relationship to each other, the force receiving top surface of the pressure sensors 114 being in contact with elastomeric material 142 enclosed in separate cavities 145 of limited two-dimensional extension. As with the embodiment of Fig. 2 the housing 130 of the present embodiment may be made of "polymeric concrete". The pressure sensors 114 are commonly connected to the electrical device 122. Between the upper part 111 of the housing and the cavities 145 horizontal gaps 132 are provided which may be broadened at the periphery in order to form a peripheral recess 132a similar to the recess 117, however not filled with elastomeric material. The gaps 132 are interrupted in regions located vertically above the pressure sensors 114 such that posts 134 are formed directly transmitting any forces applied to the top surface 111 to the elastomeric material 142 and the pressure sensors 114. On the other hand, regions 138 located horizontally between the cavities 145 improve the rigidity of the base of the housing 130.

In operation, a load placed on the top surface 111 exerts forces thereon which are transmitted to the pressure sensors 114. The horizontal parts of the upper part of the housing 113 located above the gaps 132 act as a kind of beam transmitting forces received to the posts formed in the regions 134.

With the embodiment of Fig.4 a force exerted onto the top surface 111 of the flat-spread force measuring apparatus is transferred to force measuring elements 162 arranged at distance to each other vertical to the plane of the drawing by means of a wedge type member 160. Again the unitary housing may be made of "polymeric concrete" whilst the wedge type member 160 may also be made of polymeric concrete or metal, in particular stainless steel.

With this embodiment the bottom surface of the cavity is provided with wedgelike ledges 158 parallel to each other opposing similarly inclined surfaces of the wedge type member 160. Between the plane top surface of the wedge type member 160 and the inner top surface of the housing 150 a gap is provided the major part thereof being filled with elastomeric material 164. Similarly,elastomeric material 155 is provided in the sawtooth type gap between the lower surface of the wedge type member 160 and the inner bottom surface of the housing 150. It should be noted that the elastomeric materials 164 and 152, respectively, do not completely fill the gaps. Rather, at the peripheral margin and at the regions at the steep edges of the saw teeth there are free spaces preferably filled with a light synthetic foam material.

One or more force measuring elements 162 are arranged in a compartment 70 unitary to the housing 150.
Further details of embodiments of the wedge type will be explained hereinafter.

For manufacturing a force measuring apparatus as shown in Fig. 2 and 3 first a body may be cast or moulded by polymerizing a mixture of the basic components of the elastomeric material 112 or 142, respectively. Again, a method should be used by which a bubblefree material is produced, as explained before. The body such made of elastomeric material is then placed into a mould complementary to the exterior shape of the housing 110 or 130, respectively. The pressure sensor(s) 114 are placed into the mould as well. If desired, reinforcement means as grids or rods consisting of synthetic material or steel may be arranged in the mould. For forming the gaps 132 and 132a, respectively, metal strips coated with anti-adhereing substances may be placed into the mould. Alternatively, to form these gaps synthetic foam material may be used which is left in the gaps or is rinsed out after moulding of the housing 130. Also, the lead 118 and, if desired, the connector 126 and the electrical device 122 may be placed into the mould for casting-in. Now the reacting mixture for the "polymeric concrete" is filled into the mould. After a short period of time, exemplary 30 minutes, the final force measuring apparatus may be recovered from the mould. The metal strips for the gaps 132, 132e are removed.

Alternatively, the housing 110 or 130, respectively may be formed layer by layer. First the base part is formed using a respective mould into which filling bodies corresponding to the bodies of the elastomeric material 112, 142 and the pressure sensors 14 are placed. After moulding the base part the filling body is removed and the elastomeric material is filled in using the base part as a mould as explained in the International Patent Application WO86/03584. Only after this step the top part of the housing 110, 130 is moulded.

In respect of the embodiment of Fig. 4 first the housing 150 and the wedge member 160 are moulded separately followed by the filling-in of the foam material 154 and the reacting elastomeric material 152 which is then hardened during applying vacuum in order to remove air bubbles from the hardening elastomeric material. Alternatively, the wedge member 160 may first be provided with the layers 152, 154 and then placed into a mould for casting the housing 150 in a manner as explained above.

The material, called "polymeric concrete" is a mixture using for polymerisation synthetic materials as epoxy resines, methyl-metacrylate resines or polyester resines. Filling materials are sand, quartz powder or ground granite. Furthermore, glass or preferably carbon fibres may be used. Other filling materials may be used as far as they are dry and do not react with the resines used. Mixtures which may be used are sold by KID Impragniertechnik GmbH, Georgenstraße 8, Grafing West Germany. The material used harden without heat application. The hardening process is initiated by suitable agents and is completed in a period of a few minutes up to several hours. All measures known in the field of moulding may be applied with the additional advantage that high temperatures need not to be considered.

It should be noted that it is an important aspect of the present invention that the elastomeric material is completely enclosed hermetically and pressure-tight the housing acting as a diaphragm. In view of the extremely small measuring displacements in the order of tens of micrometers the accuracy is high.

It should be noted that for embodiments using completely closed cavities for the elastomeric material the latter may be replaced by an incompressible liquid. For removing air bubbles from the elastomeric material and the "polymeric concrete" the mould may be subjected to high centrifugal forces or vacuum as explained before.

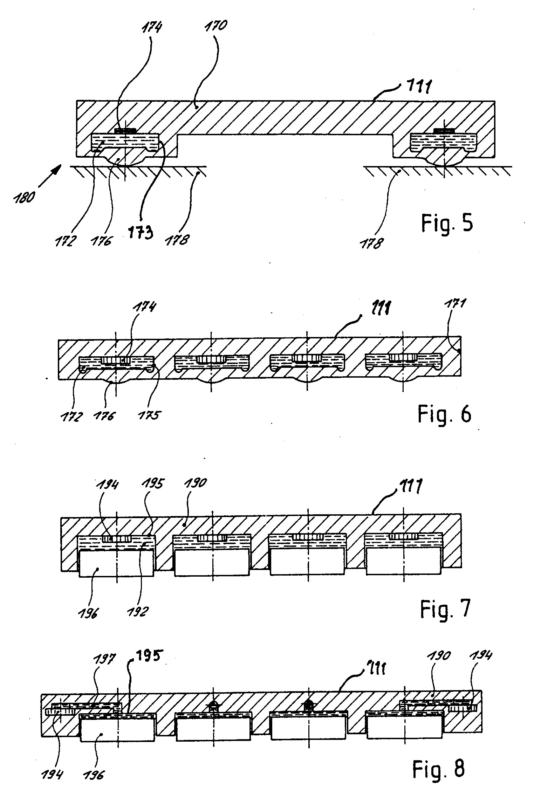

Fig. 5 shows an embodiment of a flat-spead force measuring apparatus comprising a platform 170 consisting of "polymeric concrete". The platform having a plane surface is supported through force measuring devices 174, elastomeric material 172 and a force introduction element exemplary a spheric projection 176 on a base 178. Using a rectangular shape such type of posts 180 may be provided at each corner of the platform 170. Using a circular shape at least three of such posts 180 are distributed around the periphery.

As shown in Fig. 5 a relatively broad, flat cavity 173 is filled with elastomeric material 172 which is in contact with the pressure sensor 174. Again, the total arrangement is moulded unitary in a manner as explained before in connection with Figs. 2 and 3.

As a modification of the embodiment of Fig. 5 a force measuring device similar to that of Figs. 1 to 4 of the International Patent Application WO86/03584 may be used instead of the posts 180.

Fig. 6 illustrates an embodiment of a flat-spread force measuring apparatus which is a modification of the embodiment of Fig. 5 and uses force measuring devices as generally referred to as posts 180 in Fig. 5 evenly distributed over the area of the apparatus.

Again each post is designed, in principle, as the device according to Fig. 2 a pressure sensor 174 being arranged in contact with elastomeric material 172 filled in a flat cavity 175. It should be noted that with this embodiment the apparatus has a relatively rigid top part having a plane top surface whilst the bottom surface is provided with projections 176 arranged below the elastomeric material 172 and the pressure sensors 174, respectively, which projections 176 make pointlike contact to any suitable plane base. Those regions of the housing 171 located below the cavities 175 act as a kind of diaphragm for transmitting supporting forces onto the elastomeric material 172 and the pressure sensors 174, respectively. As compared with the embodiment of Fig. 2 it will appreciated that, looking in a vertical direction, the arrangement of the various elements is just the other way around.

Fig. 7 shows a further embodiment of a flat-spread force measuring apparatus using a housing 190 preferably made of "polymeric concrete" having a plane rigid top part, similar to that of the embodiment of Fig. 6 . The force measuring device 172 to 176 of Fig. 6 is replaced by a force measuring device each similar to that of International Patent Application WO86/03584. Specifically a piston 192 is inserted into a recess 195 filled with elastomeric material 192 in contact with a pressure sensor 194.

The narrow annular gap between the cylindrical surfaces of the piston 192 and the recess formed in the housing 190 is filled with elastomeric material. The embodiment of Fig. 7 offers the same advantages as the embodiment of Fig. 6 having a rigid plane top part for receiving heavy loads which are measured on the basis of the supporting forces exerted onto the pistons 196. Even with a non-uniform loading of the platform the accuracy of measurement is excellent.

Fig. 8 shows a modification of the embodiment of Fig. 7 permitting a further reduction of the overall height of the flat-spread force measuring apparatus. With this embodiment the space of the recesses 195 is reduced and the pressure sensors 194 are arranged in peripheral regions of the housing 190 at a vertical position which is in the level of the piston 192. The pressure sensors 194 are in pressure contact with the elastomeric material 192 in the recess 195 through a duct 197 which may even be connected sidewards of the recess 195. As indicated in Fig. 8 the pressure sensors 194 may be arranged in peripheral regions at all four sides of a rectangular apparatus.

It should be noted that the pistons 196 of the embodiments of Fig. 7 and 8 may be provided with spherical projections 176 according to Fig. 6 to get a pointlike support on a plane base.

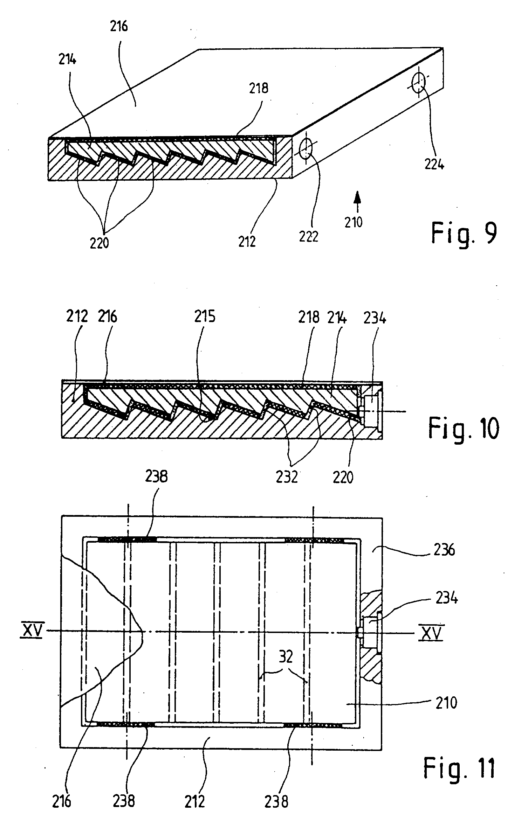

Fig. 9 shows an embodiment of a flat-spread force measuring apparatus of a wedge-type foam similar to that of Fig. 4. This force measuring apparatus 210 includes a very flat base member 212 preferably made of metal, as steel or "polymeric concrete". Over a major area of the base member 212 the latter is provided with a recess which is covered by a relatively thin plate 216 made of steel. The bottom of the recess 213 (Fig. 10) is formed with wedge-type ledges parallel to each other. Thus, in a vertical section as shown in Fig. 9 the bottom has a saw tooth-like form with steep leading edges and smooth trailing edges.

Within the recess 213 there is provided a wedge member 214 the lower side of which has a shape complementary to the bottom of the recess 213.

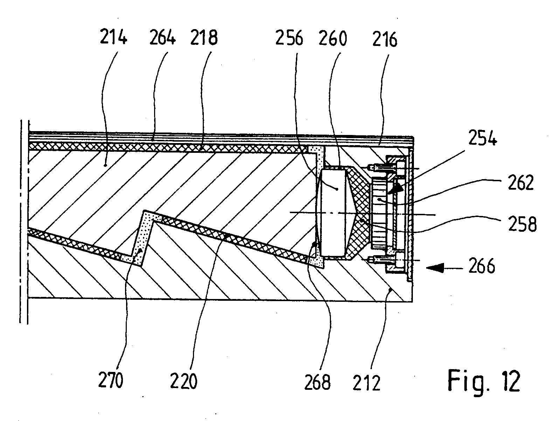

Similar to the embodiment of Fig. 4 a relatively thin layer of elastomeric material is provided between the plate 216 and the plane top surface of the wedge member 214. With the exception of a small peripheral region the total area is covered by this elastomeric material 218. Layers 220 of similar elastomeric material are provided between the smooth trailing surfaces of the recess 213 and those of the wedge member 214. (see also Fig. 12). It should be noted that the steep leading surfaces are not covered by elastomeric material. Thus, free spaces are formed there between the base member and the wedge member 214.

Force measuring elements 234 (Figs. 10 and 11) are inserted into openings 222, 224.

In operation, a load placed on plate 216 exerts forces through the elastomeric material onto the wedge member 214 which is urged in Fig. 9 to the right pressing against the force measuring elements inserted in the openings 222, 224.

Figs. 10 and 11 show in more detail the embodiment of Fig. 9 the embodiment having a rectangular shape. Ledges 232 extend in parallel to each other in lateral direction. A force exerted onto the plate 216 causes a horizontal force component acting onto the wedge member 214, which presses against a force measuring element 234 provided in an opening provided in a side wall 236, as seen in Figs. 10 and 11. It should be noted that this side wall 236 is of very low height and the force measuring element 234 is arranged in alignment with a longitudinal centre axis II-II of the apparatus. It should be noted that a force element having a pull response could be arranged in the side wall opposite to the side wall 236 alternatively or in addition to the force measuring element 234.

When using only one force measuring element, preferably the wedge member 214 is guided in parallel by layers 238 provided at the lateral face surfaces of the wedge member 214 and the interior longitudinal surfaces of the base member 212.

It should further be noted, that the plate 216 is secured to the base member 212 at least in the direction of the minute movement of the wedge member 214; in order to transfer any horizontal component of the force applied to the plate 216 is directly transferred to the base member 212 and does not influence the measuring result.

As indicated in Fig. 9 two or more force measuring elements may be arranged in the side wall 236 (Fig. 11) of the base member 212. This is desirable in particular in those cases where the ledges 232 extend in the greater dimension, i.e. lengthwise rather than lateral as shown in Fig. 11.

Fig. 12 illustrate in more detail the design and arrangement of a force measuring device 254 used in connection with this embodiment. In principle, the design corresponds to the design of the force measuring devices explained in International Patent Application WO 86/03584 . Specifically, a generally cylindrical opening 260 is formed in the side wall of the base member 212; thus the force measuring device is completely integrated into the side wall. A force introduction piston 256 is fitted into the opening 260 forming a very narrow annular gap between the cylindrical surfaces of the piston 256 and the opening 260. At the bottom of the opening 260 there is arranged a pressure sensor 262 which may be of piezo-electric or piezo-resistive type. In the opening 260 the space between the force introduction piston 256 and the pressure sensor 262 as well as the narrow gap is filled with bubblefree elastomeric material 258. The pressure sensor 262 may be inserted and exchanged through an opening 266 after removal of a cover plate 264.

Fig. 12 shows in more detail the wedge member 214 urging with its face 268 to the force introduction piston 256. Plate 216 is shown in engagement with the top surface of the side wall of the base member 212, the plate 216 being secured thereto by bonding or screws (not shown).

Further, Fig. 12 shows in more detail the free space at the steep leading surfaces of the bottom surface of the recess provided in the base member 212 which may be filled by synthetic foam material 270. Preferably, pressure sensors are used which have a minimum displacement exemplary in the range of less than 1 mms. Thus, the tensional constant of the elastomeric material which has certain temperature dependency does not influence the the measurement.

Since the elastomeric layers are relatively thin exemplary in the range of 0.2 to 0.3 mms they have little contribution to the overall height of the apparatus and there is no danger of a laterally squeezing out of the material.

The flat-spread force measuring appartus according to the embodiment of Figs. 9 to 12 may have many applications as bath room scales, truck scales or bin or bunker weighing device. In view of the very low weight of the apparatus it is easily transportable. No rigidity of a base member is necessary since it is assumed that the apparatus is placed on a plane base as a road or the ground of a room. Since the plate 216 is secured to the base member 212 the force measuring device is hermetically sealed. The flat elements 212, 214 and 216 have an extremely low thickness such that the overall height is in the range of 5 to 50 mms.

As a further integration the force introduction piston 256 may be made integral to the wedge member 214.

The manufacture of the apparatus according to the this embodiment may correspond to that of the devices explained before.

In the preceding description flat spread force measuring devices and apparatuses have been disclosed which are particularly simple in design, flat in their overall-heights and of excellent accuracy. The use of bubble-free elastomeric material ensures a complete transmission of the forces introduced to the force measuring device to the pressure sensors there is a reduction in weight of the devices by using "polymere concrete". Manufacturing costs are reduced by the easy manufacture of the devices and apparatuses by moulding of the elements at ambient temperatures. Using spheric projections having pointlike contact to a plane base as a street or ground surface ensures a defined load introduction. The design of a wedge-type force measuring apparatus reduces the number of force measuring devices necessary.

## Claims

1. Flache Kraftmeßvorrichtung umfassend:
- ein steifes, festes flaches Gehäuse (130) mit einer im wesentlichen ebenen oberen Fläche (111) zur Aufnahme einer Last;
- eine Vielzahl von flachen Hohlräumen (145), die in dem Gehäuse (130) voneinander beabstandet vorgesehen sind und sich parallel zu der oberen Fläche (111) erstrecken;
- im wesentlichen blasenfreies elastomeres Material (142), das in den Hohlräumen (145) enthalten ist;
- eine Vielzahl von Drucksensoren (114), die jeweils in Berührung mit dem elastomeren Material in jedem der Hohlräume angeordnet sind;
- einen engen Spalt (132), der sich parallel zu der oberen Fläche (111) und unterhalb dieser Fläche erstreckt, wobei der Spalt (132) durch Pfosten (134) überbrückt ist, die in vertikaler Richtung über jedem Drucksensor (114) angeordnet sind; und
- Auswertemittel (122), die mit den Drucksensoren (114) in elektrischer Verbindung stehen, um hiervon erhaltene elektrische Signale zusammenzufassen und von der oberen Fläche (111) über die Pfosten (134) durch das elastomere Material (142) an die Drucksensoren (114) übertragene örtliche Kraftkomponenten darzustellen, ein Basisteil (113) und ein Lastaufnahmeteil (110), die wenigstens an ihrem Umfang einstückig miteinander verbunden sind, um das im wesentlichen flache Gehäuse unter Freilassung der Hohlräume dazwischen zu bilden, die mit dem im wesentlichen blasenfreien elastomeren Material vollständig gefüllt sind, wobei die Hohlräume jeweils eine Öffnung zum Bilden einer Berührung zwischen dem elastomeren Material und einem der mit dem Hohlraum in Verbindung stehenden Drucksensoren (114) aufweisen.

2. Kraftmeßvorrichtung nach Anspruch 1, wobei die Pfosten (134) aus dem Material des Basisteils (113) gebildet sind und sich in Ausrichtung zu den Drucksensoren (114) senkrecht zu der oberen Fläche (111) erstrecken.

3. Kraftmeßvorrichtung nach Anspruch 1 oder 2, wobei die Auswertemittel in einer Kammer (120) angeordnet sind, die einstückig mit dem Basisteil (113) ist.

4. Flache Kraftmeßvorrichtung umfassend:
- ein steifes, festes flaches Gehäuse (170,171,190) mit einer im wesentlichen ebenen oberen Fläche zur Aufnahme einer Last;
- eine Vielzahl von flachen Hohlräumen oder Vertiefungen (173;175;195), die in dem Gehäuse (170,171,190) voneinander beabstandet vorgesehen sind und sich parallel zu der oberen Fläche (111) erstrecken;
- im wesentlichen blasenfreies elastomeres Material (172;192), das in den Hohlräumen oder Vertiefungen (173;175;195) enthalten ist;
- eine Vielzahl von Drucksensoren (174;194), die jeweils in Berührung mit dem elastomeren Material (172;192) in jedem der Hohlräume oder Vertiefungen (173;175;195) angeordnet sind;
- eine Vielzahl von Krafteinleitungsmitteln (176;196), die jeweils in einer im wesentlichen vertikalen Ausrichtung zu den Drucksensoren (174;194) und unterhalb dieser angeordnet sind; und
- Auswertemittel, die mit den Drucksensoren (174;194) in elektrischer Verbindung stehen, um hiervon erhaltene elektrische Signale zusammenzufassen und von den Krafteinleitungsmitteln (176;196) durch das elastomere Material (172;192) an die Drucksensoren (174;194) übertragene örtliche Kraftkomponenten darzustellen.

5. Kraftmeßvorrichtung nach Anspruch 4, wobei die Krafteinleitungsmittel (176) Bereiche einer unteren Fläche des Gehäuses sind und eine Art von Membran unter jedem Hohlraum (173;175) bilden und an ihrer unteren Seite jeweils mit einem Vorsprung zur punktförmigen Abstützung der Kraftmeßvorrichtung versehen sind.

6. Kraftmeßvorrichtung nach Anspruch 4, wobei Krafteinleitungsmittel jeweils ein Kolben (196) ist, der in eine zylindrische Vertiefung (195) eingesetzt ist, wobei eine innere Stirnfläche des Kolbens (196) eine Wandung der Vertiefung (195) bildet und ein enger Spalt zwischen den zylindrischen Flächen des Kolbens und der Vertiefung (195) ausgebildet ist, der mit elastomerem Material (192) gefüllt ist.

7. Flache Kraftmeßvorrichtung umfassend:
- ein allgemein flaches Gehäuse (150;212) mit einer inneren Bodenfläche, die mit einer Vielzahl von keilförmigen Rippen (158;220) ausgebildet ist, die sich parallel zueinander in einer ersten Ausdehnungsrichtung der Kraftmeßvorrichtung erstrecken;
- ein Keilelement (160;214), das im Innern des Gehäuses angeordnet ist und eine untere Fläche besitzt, die mit keilförmigen Rippen ausgestattet ist, die komplementär zu denen an der Bodenfläche des Innern des Gehäuses (150;212) sind, und eine plane obere Fläche besitzt, die einer unteren Fläche (111) einer ebenen Oberwand (216) des Gehäuses (150;212) gegenüberliegt, sowie Spalte zwischen den sich gegenüberliegenden Flächen der Rippen (158;220) der Bodenfläche des Innern des Gehäuses (150;212) und der unteren Fläche des Keilelementes (160;214) und zwischen der unteren Fläche der Oberwand (111) und der oberen Fläche des Keilelementes (160;214) ausgebildet sind;
- elastomeres Material (152;218), das Hauptbereiche der Spalte ausfüllt mit der Ausnahme von Spaltbereichen (154;270), die in Randbereichen der oberen Fläche des Keilelementes (160;214) und in Bereichen benachbart zu den steil ansteigenden Flächen der Bodenfläche des Keilelementes (160;214) liegen; und
- wenigstens ein Kraftmeßelement (162;234;254), das in dem Gehäuse in Wirkverbindung mit einer Stirnfläche des Keilelementes (160;214) angeordnet ist, wobei sich die Stirnfläche seitlich zu einer Bewegungsrichtung des Keilelementes (160;214) bei Lasteinwirkung auf die obere Fläche (111) erstreckt.

8. Kraftmeßvorrichtung nach Anspruch 7, wobei in Räumen, die nicht mit elastomerem Material (152;218) gefüllt sind, ein synthetisches Schaummaterial vorgesehen ist und das elastomere Material (152;218) fest an den Oberflächen des Keilelementes (160;214) und des Gehäuses (150;212) haftet.

9. Kraftmeßvorrichtung nach Anspruch 7 oder 8, wobei wenigstens ein Kraftmeßelement (254) eine in der Wandung des Gehäuses (212) vorgesehene zylindrische Vertiefung, ein in die Vertiefung eingesetztes Kolbenelement (256), das einen engen Spalt (260) zwischen zylindrischen Flächen der Vertiefung und dem Kolbenelement bildet, elastomeres Material (258), das den Spalt und einen Raum ausfüllt, der durch die Oberflächen der Vertiefung und eine innere Stirnfläche des Kolbenelementes begrenzt ist, und einen in der Wandung angeordneten Drucksensor (262) umfaßt, der in Berührung mit dem elastomeren Material steht.

10. Kraftmeßvorrichtung nach einem der Ansprüche 7 bis 9, wobei die Oberwand des Gehäuses eine Metallplatte (216) von relativ geringer Dicke verglichen mit der Gesamthöhe der Vorrichtung ist und wobei die Metallplatte (216) wenigstens an sich gegenüberliegenden Rändern des Gehäuses befestigt ist, die sich in einer Bewegungsrichtung des Keilelementes (160;214) bei Krafteinleitung an der oberen Fläche (111) erstrecken.

11. Kraftmeßvorrichtung nach einem der vorhergehenden Ansprüche, wobei das Gehäuse (130;150;170,171,190;212) aus Polymerwerkstoff mit darin verteiltem Füllmaterial hergestellt ist.

12. Verfahren zum Herstellen einer flachen Kraftmeßvorrichtung nach Anspruch 11, umfassend die Schritte:
- blasenfreies Gießen wenigstens eines flachen Körpers aus elastomerem Material;
- Bereitstellen einer Gießform für ein Gehäuse (130;150;170,171,190;212);
- Anordnen des Körpers oder der Körper aus elastomerem Material in der Gießform:
- Anordnen wenigstens eines Drucksensors (114,174;194) in der Gießform:
- Vorbereiten einer Mischung aus Basiskomponenten eines polymerisierbaren Materials und Füllmaterials, um Polymerbeton zu bilden;
- Einleiten der Polymerisation in der Mischung;
- Füllen der Gießform mit der Mischung;
- Abschließen der Polymerisation; und
- Entfernen der Gießform.

13. Verfahren zum Herstellen einer flachen Kraftmeßvorrichtung nach Anspruch 11, umfassend die Schritte:
- Bereitstellen eines Bodens einer Gießform für ein Gehäuse (130;150;170,171,190;212);
- Anordnen von Schaumstoffkörpern in dem Bodenteil entsprechend von in dem Gehäuse (130;150;170,171,190;212) zu formenden Hohlräumen oder Vertiefungen:
- Vorbereiten einer Mischung aus Basiskomponenten eines polymerisierbaren Materials und Füllmaterials;
- Einleiten der Polymerisation, um Polymerbeton zu bilden;
- Füllen des Bodenteils der Gießform mit der Mischung;
- Abschließen der Polymerisation;
- Entfernen der Schaumstoffkörper aus dem gegossenen Bodenteil des Gehäuses (130;150;170,171,190;212);
- Anordnen von Drucksensoren (114,174;194) in den Hohlräumen oder Vertiefungen;
- blasenfreies Gießen von elastomerem Material in die Hohlräume oder Vertiefungen;
- Vervollständigen des Gießens des Gehäuses (130;150;170,171,190;212) unter Verwendung der Mischung aus polymerisierbarem Material und Füllmaterial, um Polymerbeton zu bilden.

## Patentansprüche

1. A flat-spread force measuring apparatus comprising:
- a stiff rigid flat housing (130) having an essentially plane top surface (111) for receiving a load;
- a plurality of flat cavities (145) provided in said housing (130) spaced apart of each other and extending in parallel to said top surface (111);
- essentially bubble-free elastomeric material (142) contained in said cavities (145);
- a plurality of pressure sensors (114) one each arranged in contact with said elastomeric material in each of said cavities;
- a narrow gap (132) extending in parallel to said top surface (111) and below said surface, said gap (132) being bridged by posts (134) located vertically above each pressure sensor (114); and
- evaluation means (122) electrically connected to said pressure sensors (114) for combining electrical signals received therefrom and representing local force components transmitted from said top surface (111) via posts (134) through said elastomeric material (142) to said pressure sensors (114), a base member (113) and a load receiving member (110) being integrally connected at least at their peripheries to form the generally flat housing, leaving the cavities therebetween completely filled with said essentially bubble-free elastomeric material, said cavities having each an opening for establishing a contact between said elastomeric material and a said pressure sensor (114) associated to said cavity.

2. The force measuring apparatus of claim 1, wherein the posts (134) are formed of material of said base member (113) and extending in alignment to said pressure sensors (114) vertical to said top surface (111).

3. The force measuring apparatus of claim 1 or 2, wherein said evaluation means are arranged in a compartment (120) unitary to said base member (113).

4. A flat-spread force measuring apparatus comprising:
- a stiff rigid flat housing (170,171,190) having an essentially plane top surface for receiving a load;
- a plurality of flat cavities or recesses (173;175;195) provided in said housing (170,171,190) spaced apart of each other and extending in parallel to said top surface (111);
- essentially bubble-free elastomeric material (172;192) contained in said cavities or recesses (173;175;195);
- a plurality of pressure sensors (174;194) one each arranged in contact with said elastomeric material (172;192) in each of said cavities or recesses (173;175;195);
- a plurality of force introduction means (176;196) one each arranged in an essentially vertical alignment to said pressure sensors (174;194) and below them; and
- evaluation means electrically connected to said pressure sensors (174;194) for combining electrical signals received therefrom and representing local force components transmitted from said force introduction means (176;196) through said elastomeric material (172;192) to said pressure sensors (174;194).

5. The force measuring apparatus of claim 4, wherein said force introduction means (176) are regions of a bottom surface of said body defining a type of diaphragm below each cavity (173;175), and being provided at their lower side with a projection each for point-like support of said force measuring apparatus.

6. The force measuring apparatus of claim 4, wherein said force introduction means are a piston (196) each inserted in a cylindrical recess (195) an inner face surface of said piston (196) forming a wall of a said recess (195), a narrow gap being formed between cylindrical surfaces of said piston and said recess (195) being filled with elastomeric material (192).

7. A flat-spread force measuring apparatus comprising:
- a generally flat housing (150;212) having an interior bottom surface formed with a plurality of wedge-type ribs (158;220) extending in parallel to each other in a first dimensional direction of said force measuring apparatus;
- a wedge member (160;214) arranged in said interior of said housing having a lower surface provided with wedge-type ribs complementary to those of said bottom surface of said interior of said housing (150;212) and having a plane top surface opposing a lower surface (111) of a plane top wall (216) of said housing (150;212), gaps being formed between opposing surfaces of said ribs (158;220) of said bottom surface of said interior of said housing (150;212) and of said lower surface of said wedge member (160;214) and between said lower surface of said top wall (111) and said top surface of said wedge member (160;214);
- elastomeric material (152;218) filling main portions of said gaps with the exception of gap parts (154;270) lying in marginal regions of said top surface of said wedge member (160;214) and in regions adjacent to steep leading surfaces of said lower surface of said wedge member (160;214); and
- at least one force measuring element (162;234;254) mounted in said housing in engagement with a face surface of said wedge member (160;214) which face surface extends laterally to a direction of movement of said wedge member (160;214) upon load application on said top surface (111).

8. The force measuring apparatus of claim 7, wherein in spaces not filled with elastomeric material (152;218) a synthetic foam material is provided and said elastomeric material (152;218) strongly adheres to said surfaces of said wedge member (160;214) and said housing (150;212).

9. The force measuring apparatus of claim 7 or 8, wherein said at least one force measuring element (254) comprises a cylindrical recess provided in said wall of said housing (212), a piston member (256) inserted into said recess and forming a narrow gap (260) between cylindrical surfaces of said recess and said piston member, elastomeric material (258) filling said gap and a space defined by surfaces of said recess and an inner face surface of said piston member, and a pressure sensor (262) mounted in said wall and in contact with said elastomeric material.

10. The force measuring apparatus of any of claims 7 to 9, wherein said top wall of said housing is a metal plate (216) of relatively small thickness as compared with the overall height of said apparatus and wherein said metal plate (216) is secured at least to opposing rims of said housing extending to a direction movement of said wedge member (160;214) upon load application onto said top surface (111).

11. The force measuring apparatus of any preceding claim, wherein said housing (130;150;170,171,190;212) is made of polymeric material having filler material distributed therein.

12. A method for producing a flat-spread force measuring apparatus of claim 11 comprising the steps:
- bubble-free moulding at least one flat body of elastomeric material;
- providing a mould for a housing (130;150;170,171,190;212);
- arranging said body or bodies of elastomeric material in said mould;
- arranging at least one pressure sensor (114,174;194) in said mould;
- preparing a mixture of basic components of a polymerizable material and filler material in order to form polymeric concrete;
- initiating polymerization in said mixture;
- filling said mould with said mixture;
- completing polymerization; and
- removing said mould.

13. A method for producing a flat-spread force measuring apparatus of claim 11 comprising the steps:
- providing a base of a mould for a housing (130;150;170,171,190;212);
- arranging foam bodies in said base part corresponding to cavities or recesses to be formed within said housing (130;150;170,171,190;212);
- preparing a mixture of basic components of a polymerizable material and filler material;
- initiating polymerization in order to form polymeric concrete;
- filling said base part of said mould with said mixture;
- completing polymerization;
- removing said foam bodies from the moulded base part of said housing (130;150;170,171,190;212);
- arranging pressure sensors (114,174;194) in said cavities or recesses;
- bubble-free moulding of elastomeric material in said cavities or recesses;
- completing moulding of said housing (130;150;170,171,190;212) using said mixture of polymerizable material and filler material in order to form polymeric concrete.

## Revendications

1. Appareil de mesure des forces s'étendant à plat et comprenant :
- un logement plat (130) qui est rigide et indéformable et qui présente une surface supérieure (111) plane pour l'essentiel et destinée à recevoir une charge ;
- une pluralité de cavités plates (145) qui sont prévues dans ledit logement (130), qui sont espacées les unes des autres et qui s'étendent parallèlement à ladite surface supérieure (111) ;
- un matériau élastomère (142) qui est exempt de bulles, pour l'essentiel, et qui est contenu dans lesdites cavités (145) ;
- une pluralité de capteurs de pression (114) dont chacun est disposé en contact avec ledit matériau élastomère dans chacune desdites cavités ;
- un interstice étroit (132) qui s'étend parallèlement à ladite surface supérieure (111) et au-dessous de ladite surface, ledit interstice (132) étant interrompu par des piliers (134) situés au-dessus de chaque capteur de pression (114) dans le sens vertical ; et :
- des moyens d'évaluation (122) reliés électriquement auxdits capteurs de pression (114) pour combiner les signaux électriques qui sont reçus à partir d'eux et qui représentent les composantes locales de la force transmises depuis ladite surface supérieure (111) aux capteurs de pression (114), par l'intermédiaire des piliers (134) et à travers ledit matériau élastomère (142), cependant qu'un organe de base (113) et un organe recevant la charge (110) sont reliés d'un seul tenant, du moins sur leur pourtour, pour former le logement généralement plat, en laissant entre eux les cavités complètement remplies par ledit matériau élastomère exempt de bulles pour l'essentiel, et que lesdites cavités présentent chacune une ouverture pour établir un contact entre ledit matériau élastomère et l'un desdits capteurs de pression (114) associé à ladite cavité.

2. Appareil de mesure des forces selon la revendication 1, dans lequel les piliers (134) sont constitués par le matériau dudit organe de base (113) qui s'étend verticalement dans l'alignement desdits capteurs de pression (114), en allant vers ladite surface supérieure (111).

3. Appareil de mesure des forces selon la revendication 1 ou 2, dans lequel lesdits moyens d'évaluation sont disposés dans un compartiment (120) d'un seul tenant avec ledit organe de base (113).

4. Appareil de mesure des forces s'étendant à plat et comprenant :
- un logement plat (170, 171, 190) qui est rigide et indéformable et qui présente une surface supérieure plane pour l'essentiel et destinée à recevoir une charge ;
- une pluralité de cavités ou d'évidements plats (173 ; 175 ; 195) qui sont prévus dans ledit logement (170, 171, 190), qui sont espacés les uns des autres et qui s'étendent parallèlement à ladite surface supérieure (111) ;
- un matériau élastomère (172 ; 192) qui est exempt de bulles, pour l'essentiel, et qui est contenu dans lesdites cavités ou évidements (173 ; 175 ; 195) ;
- une pluralité de capteurs de pression (174 ; 194) dont chacun est disposé en contact avec ledit matériau élastomère (172 ; 192) dans chacune desdites cavités ou évidements (173 ; 175 ; 195) ;
- une pluralité de moyens d'introduction des forces (176 ; 196) dont chacun est disposé en étant pour l'essentiel aligné sur lesdits capteurs de pression (174 ; 194) dans le sens vertical et en étant au-dessous d'eux ; et :
- des moyens d'évaluation reliés électriquement auxdits capteurs de pression (174 ; 194) pour combiner les signaux électriques qui sont reçus à partir d'eux et qui représentent les composantes locales de la force transmises auxdits capteurs de pression (174 ; 194) depuis lesdits moyens d'introduction des forces (176 ; 196) et à travers ledit matériau élastomère (172 ; 192).

5. Appareil de mesure des forces selon la revendication 4, dans lequel lesdits moyens d'introduction des forces (176) sont des régions d'une surface de fond dudit corps définissant une sorte de diaphragme au-dessous de chaque cavité (173 ; 175), et sont pourvus sur leur côté inférieur d'une saillie dont chacune sert à l'appui ponctuel dudit appareil de mesure des forces.

6. Appareil de mesure des forces selon la revendication 4, dans lequel lesdits moyens d'introduction des forces sont constitués par un piston (196) qui est à chaque fois inséré dans un évidement cylindrique (195), une surface de la face intérieure dudit piston (196) formant une paroi dudit évidement (195), et un interstice étroit étant formé entre les surfaces cylindriques dudit piston et dudit évidement (195) en étant rempli de matériau élastomère (192).

7. Appareil de mesure des forces s'étendant à plat et comprenant :
- un logement (150, 212) généralement plat et présentant une surface de fond intérieure dans laquelle est formée une pluralité de nervures en forme de coins (158 ; 220) qui s'étendent parallèlement entre elles dans une première direction dimensionnelle dudit appareil de mesure des forces ;
- un organe formant coin (160 ; 214) qui est disposé dans ledit intérieur dudit logement, qui présente une surface inférieure munie de nervures en forme de coins complémentaires de celles de ladite surface de fond dudit intérieur dudit logement (150, 212) et qui présente une surface supérieure plane qui fait face à une surface inférieure (111) d'une paroi supérieure plane (216) dudit logement (150, 212), des interstices étant formés entre des surfaces opposées desdites nervures (158 ; 220) de ladite surface de fond dudit intérieur dudit logement (150, 212) et de ladite surface inférieure dudit organe formant coin (160 ; 214), et entre ladite surface inférieure de ladite paroi supérieure (111) et ladite surface supérieure dudit organe formant coin (160 ; 214) ;
- un matériau élastomère (152 ; 218) qui remplit des parties principales desdits interstices, à l'exception de parties d'interstices (154 ; 270) situées dans des régions des bords de ladite surface supérieure dudit organe formant coin (160 ; 214) et dans des régions adjacentes aux surfaces à forte pente de ladite surface inférieure dudit organe formant coin (160 ; 214) ; et :
- au moins un élément de mesure des forces (162 ; 234 ; 254) monté dans ledit logement en contact avec une surface frontale dudit organe formant coin (160 ; 214), cette surface frontale s'étendant transversalement par rapport à une direction de déplacement dudit organe formant coin (160 ; 214) lorsqu'une charge est appliquée sur ladite surface supérieure (111).

8. Appareil de mesure des forces selon la revendication 7, dans lequel un matériau en mousse synthétique est prévu dans les espaces qui ne sont pas remplis par le matériau élastomère (152 ; 218), ledit matériau élastomère (152 ; 218) adhérant fortement auxdites surfaces dudit organe formant coin (160 ; 214) et dudit logement (150 ; 212).

9. Appareil de mesure des forces selon la revendication 7 ou 8, dans lequel ledit au moins un élément de mesure des forces (254) comprend un évidement cylindrique ménagé dans ladite paroi dudit logement (212), un organe formant piston (256) inséré dans ledit évidement et formant un interstice étroit (260) entre les surfaces cylindriques dudit évidement et dudit organe formant piston, un matériau élastomère (258) remplissant ledit interstice et un espace défini par des surfaces dudit évidement et par une surface frontale intérieure dudit organe formant piston, et un capteur de pression (262) monté dans ladite paroi et en contact avec ledit matériau élastomère.

10. Appareil de mesure des forces selon l'une quelconque des revendications 7 à 9, dans lequel ladite paroi supérieure dudit logement est une plaque en métal (216) dont l'épaisseur est relativement faible en comparaison de la hauteur totale dudit appareil, et dans lequel ladite plaque en métal (216) est fixée au moins à des bords opposés dudit logement qui s'étendent selon une direction du déplacement que subit ledit organe formant coin (160 ; 214) lorsqu'une charge est appliquée sur ladite surface supérieure (111).

11. Appareil de mesure des forces selon l'une quelconque des revendications précédentes, dans lequel ledit logement (130 ; 150 ; 170, 171, 190 ; 212) est constitué par un matériau à base de polymère dans lequel une charge est répartie.

12. Procédé pour produire un appareil de mesure des forces s'étendant à plat selon la revendication 11, lequel comprend les étapes selon lesquelles :
- on moule sans bulles au moins un corps plat en matériau élastomère ;
- on prévoit un moule destiné à un logement (130 ; 150 ; 170, 171, 190 ; 212) ;
- on dispose ledit ou lesdits corps en matériau élastomère dans ledit moule ;
- on dispose au moins un capteur de pression (114, 174 ; 194) dans ledit moule ;
- on prépare un mélange de constituants de base d'un matériau polymérisable et d'une charge afin de former du béton de polymère ;
- on amorce la polymérisation dans ledit mélange ;
- on remplit ledit moule dudit mélange ;
- on achève la polymérisation ; et :
- on enlève ledit moule.

13. Procédé pour produire un appareil de mesure des forces s'étendant à plat selon la revendication 11, lequel comprend les étapes selon lesquelles :
- on prévoit une base d'un moule destiné à un logement (130 ; 150 ; 170, 171, 190 ; 212) ;
- on dispose dans ladite partie de base des corps en mousse correspondant à des cavités ou évidements destinés à être formés dans ledit logement (130 ; 150 ; 170, 171, 190 ; 212) ;
- on prépare un mélange de constituants de base d'un matériau polymérisable et d'une charge ;
- on amorce la polymérisation afin de former du béton de polymère ;
- on remplit ladite partie de base dudit moule au moyen dudit mélange ;
- on achève la polymérisation ;
- on enlève lesdits corps en mousse de la partie de base moulée dudit logement (130 ; 150 ; 170, 171, 190 ; 212);
- on dispose des capteurs de pression (114, 174 ; 194) dans lesdites cavités ou évidements ;
- on moule sans bulles du matériau élastomère dans lesdites cavités ou évidements ;
- on achève le moulage dudit logement (130 ; 150 ; 170, 171, 190 ; 212) en utilisant ledit mélange de matériau polymérisable et de charge de façon à former du béton de polymère.
